# EUROPÄISCHE PATENTSCHRIFT

(11) **EP 1 477 786 B1**
(45) Veröffentlichungstag und Bekanntmachung des Hinweises auf die Patenterteilung: **07.11.2007**
(21) Anmeldenummer: 04011341.7
(22) Anmeldetag: 13.05.2004
(51) Int. Cl.: G01K 5/12

(54) **Verwendung metallischer Galliumlegierungen als Thermometerflüssigkeit**
Use of metallic gallium alloys as an expansion liquid in thermometers
Emploi d'un alliage métallique de gallium comme liquide d'expansion pour thermomètres

(30) Priorität: 15.05.2003 DE 10321843
(43) Veröffentlichungstag der Anmeldung: 17.11.2004
(73) Patentinhaber: Speckbrock, Gerd, 98704 Wümbach (DE)
(72) Erfinder: Speckbrock, Gerd, 98704 Wümbach (DE)
(74) Vertreter: Liedtke, Klaus

(56) Entgegenhaltungen:
- EP-A- 0 657 023
- US-A- 1 793 303

## Beschreibung

Die Erfindung betrifft die Verwendung metallischer Galliumlegierungen als Thermometerflüssigkeit, die als nicht quecksilberhaltige metallische Thermometerflüssigkeit in einem weiten Temperaturbereich von ca. -15 °C bis ca. +1000°C in Flüssigkeitsglasthermometern einsetzbar ist.
Es ist bekannt, dass diese nicht quecksilberhaltigen metallischen Thermometerflüssigkeiten wegen ihrer hohen Oberflächenspannung nicht benetzend sind und im thermometrischen System eines Kapillarthermometers in einem weiten Temperaturbereich flüssig bleiben.
Diese Thermometerflüssigkeiten sind niedrig schmelzende Mehrstoffsysteme mit eutektischen Eigenschaften, bestehend aus jeweils 3 der Elemente Gallium, Indium, Zinn sowie Spuren von Verunreinigiungen der Elemente Zink und Blei.
Legierung mit den für Thermometer geeigneten Eigenschaften sind bekannt. Vorzugsweise werden solche Legierungen als umweltschonende, ungiftige Alternative zum Quecksilber in Flüssigkeitsglasthermometern eingesetzt, wenn benetzende in der Regel organische Flüssigkeiten mit definierter linearer Ausdehnung nicht eingesetzt werden können. Der lineare Ausdehnungskoeffizient α ist bei den bekannten Legierungen gegenüber dem Quecksilber um 1/3 geringer, was zur Folge hat, dass das einzusetzende Materialvolumen im Thermometer gegenüber dem Quecksilber um 1/3 höher sein muss.

In der europäischen Patentschrift EP 0 657 023 B1 sind Legierungen mit den Komponenten Gallium (65 bis 95 Gewicht -%), Indium (5 bis 22 Gewicht-%) und Zinn (0 bis 11 Gewicht -%) genannt. Als weitere Legierungselemente sind Wismuth und alternativ Antimon als mögliche vierte Komponente in geringer Konzentration bekannt.

Die eutektische Galliumlegierung kann außerdem Spuren von Verunreinigungen der Elemente Zink und Blei enthalten.
Im technischen Datenblatt für die Legierung "Galinstan" wird eine spezielle Legierung innerhalb des oben genannten Bereiches angegeben, welche einen Phasenübergang von der flüssigen in die feste Phase erst bei einer Temperatur unter -15°C bei normalen atmosphärischen Bedingungen garantiert. In der oben angegeben Patentschrift wird für diesen Phasenübergang eine Temperatur von -19,8 ° C angegeben.
Die Eigenschaften dieser eutektischen Galliumlegierungen sind geeignet, sowohl in Kapillarthermometern mit Anzeige des Maximums, vorzugsweise in Fieberthermometer, als auch in Kapillarthermometern für Labors bzw. technische Anlagen das gesundheitsschädliche Quecksilber zu ersetzen.
Der Nachteil besteht jedoch darin, dass diese Thermometer als Massen- und Gebrauchsartikel durch den Einsatz der beschriebenen eutektischen Galliumlegierung mit dem hohen Anteil von Gallium sehr kostenintensiv sind.

Die "Indium Corporation of America" bietet lt. Offerte als Quecksilbersatz die Legierung Ga 61 Gew%, In 25 Gew%, Su 13 Gew% und Zn 1 Gew% mit einem Schmelzpunkt von 7°C und die Legierung Ga 62,5 Gew%, In 21,5% und Sn 16 Gew% mit einem Schmelzpunkt von 11°C an. Die Reduzierung des Galliumanteils sichert eine Reduzierung der Kosten bei gleichem Ausdehnungskoeffizienten. Für diese Kostenreduzierung wird eine Erhöhung des Schmelzpunktes gegenüber den in obiger Patentschrift offenbarten Legierungen als technischer Nachteil in Kauf genommen.

Der Erfindung liegt daher die Aufgabe zugrunde, die Verwendung metallischer Galliumlegierungen als Thermometerflüssigkeit unter Vermeidung der bisherigen Nachteile so weiter zuentwickeln, dass die Zusammensetzung der Galliumlegierungen an Metallkomponenten eine Erweiterung des Temperaturmeßbereiches von Flüssigkeitsglasthermometern für tiefe und für hohe Temperaturen und damit einen weiteren Quecksilberersatz bei gleichzeitiger Kostenverringerung ermöglicht.

Erfindungsgemäß wird die Aufgabe dadurch gelöst, dass die Verwendung metallischer Galliumlegierungen dadurch gekennzeichnet ist, dass die Legierungen Metallkomponenten mit folgenden Anteilen in Masse % enthalten:

| | |
|---|---|
| Gallium | 50,0-64,9 % |
| Indium | 10,0-24,9 % |
| Zinn | 10,0-29,0 % |
| Zink | 0-29,0 % und/oder |
| Blei | 0-10,00 %. |

Es wurde gefunden, dass die bisherigen Nachteile bei Legierungen mit einem Galliummanteil< 64,9 % sowohl bei Dreistoffsystemen als auch bei Vierstoffsystemen bei Abwesenheit von Gas- und Oxidanteilen nicht auftreten.

Die Untersuchung von Galliumlegierungen mit einem Galliumanteil unter 61% hat überraschenderweise gezeigt, dass galliumarme Mehrstoffsysteme ähnliche Eigenschaften wie Legierungen mit einem Galliumanteil über 61% haben, wenn die galliumarmen Legierungen unter Vakuum hergestellt werden und dadurch Oxyde gespalten werden, Sauerstoff und andere Gase aus der Legierung entfernt werden und die Neubildung von Oxyden verhindert wird, die in der flüssigen Legierung als Kristallisationsationskeime wirken. Bei Verwendung von Blei oder Zink konnte eine Erhöhung des Ausdehnungeskoeffizientes α im Vergleich zu oben gennanten bekannten Legierungen um etwa 5 % erreicht werden, wobei die für Thermometerflüssigkeiten hervorragenden Materialeigenschaften wie z. B. die hohe Oberflächenspannung, die niedrige Temperatur des Umschlags von der flüssigen in die feste Form und die Linearität der Ausdehnung der flüssigen Metallegierung denen der bisher bekannten Legierungen mindestens gleichwertig sind.
Desweiteren ist die erfindungsgemäße Verwendung von Galliumlegierungen als Thermometerflüssigkeit bezüglich ihrer Eigenschaften dadurch gekennzeichnet, dass sie frei von Gaseinschlüssen und weiteren Metalloxiden ist, dass ihre Schmelztemperatur unter Normaldruck tiefer als 0°C und im Hochvakuum tiefer als - 19°C liegt und dass ihr Temperaturmeßbereich in Flüssigkeitsglasthermometern -15°C bis +1200°C umfaßt.

Für unterschiedliche Temperaturbereiche ist die erfindungssgemäße Verwendung metallischer Galliumlegierungen durch unterschiedliche Anteile einzelner Metallkomponenten im Drei- oder Vierstoffsystem gekennzeichnet. Weitere Varianten der Verwendung von Galliumlegierungen als Thermometerflüssigkeit sind durch folgende Anteile der Metallkomponenten der Legierungen in Masse % gekennzeichnet:

| | |
|---|---|
| Ga | 50,0-61,0 % |
| In | 10,0-24,9 % |
| Sn | 10,0-29,0 % |
| Zn | 0,5-29,0 % oder |
| Pb | 0,1-29,0 % |

sowie im Dreistoffsystem

| | |
|---|---|
| Ga | 50,0-64,9 % |
| In | 10,0-24,9 % |
| Sn | 10,2-29,0 %. |

Weitere Galliumlegierungen, die vorzugsweise für einen Temperaturmeßbereich bis +600° C geeignet sind, besitzen folgende Zusammensetzung in Masse %

| | |
|---|---|
| Ga | 50,0-64,9 % |
| In | 10,0-24,9 % |
| Sn | 10,0-29,9 % |
| Zn | 2,0-10,0 %. |

Zur Stabilisierung der Zinnkomponente eines Gallium-Vierstoffsystems ist die Legierung durch folgende Anteile in Masse % gekennzeichnet

| | |
|---|---|
| Ga | 50,0-64,9 % |
| In | 10,0-24;9 % |
| Sn | 10,0-29,9 % |
| Pb | 1,0-2,0 %. |

Sie ist geeignet, einen Temperaturmeßbereich von -21°C bis +1200°C für Flüssigkeitsglasthermometer zu sichern.

Die Vorteile der erfindungsgemäßen Verwendung von Galliumlegierungen als Thermometerflüssigkeit einschließlich ihrer Variantenlegierungen im Dreioder Vierstoffsystem bestehen darin, dass sie entsprechend des geforderten Temperaturmeßbereiches für tiefe oder für hohe Temperaturen variabel günstige Anteil % te der Metallkomponenten ermöglichen. Die Legierungen sind auch geeignet, reines Gallium in Thermometern für die Messung von Temperaturen > 600°C zu ersetzen.
Die Verwendung von Galliumlegierungen als Thermometerflüssigkeit ist mit einem geringeren Galliumanteil als bekannt kostengünstiger und als Ersatz für Quecksilber in Flüssigkeitsglasthermometern bei sehr hohen und tiefen Temperaturen umweltfreundlicher.

Die Erfindung wird nachfolgend an Ausführungsbeispielen durch Angabe der Zusammensetzungen der Metallkomponenten der Galliumlegierungen beschrieben.

Folgende Metallkomponenten sind in Anteilbereichen in Masse % in den Legierungen enthalten

| | |
|---|---|
| Ga | 50,0-64,9 % |
| In | 10,0-24,9 % |
| Sn | 10,0-29,0 % |
| Zn | 0-29,0 % |
| Pb | 0-10,0 %. |

Die innerhalb dieser Anteilbereiche möglichen Varianten einzelner Galliumlegierungen für bestimmte Meßtemperaturen werden unter Vakuum geschmolzen und die Metalloxide dadurch gespalten, so das Sauerstoff und andere Gase aus der Legierung entweichen. Eine Neubildung von Oxiden wird verhindert, so dass die Legierungen gas- und metalloxidfrei sind und in flüssiger Form verwendet werden. Ihre Schmelztemperatur liegt unterschiedlich unter 0°C bei Normaldruck, im Hochvakuum unter -19°C. Als Thermometerflüssigkeit liegt ihr Temperaturmeßbereich bei ca. -15°C bis +1200°C.

Galliumlegierungen mit einem Galliumanteil < 61% besitzen überraschenderweise ähnliche Eigenschaften wie Legierungen mit einem Galliumanteil > 61%, wenn die weiteren Metallkomponentenanteile entsprechend vorliegen und die o.g. Bedingungen für die Herstellung erfüllt sind. Die Metallkomponentenbereiche betragen in Masse %

| | |
|---|---|
| Ga | 50,0-61,0 % |
| In | 10,0-24,9 % |
| Sn | 10,0-29,9 % |
| Zn | 0,5-29,0 % oder |
| Pb | 0,1-29,0 %. |

Bei Verwendung von Blei oder Zink ist eine Erhöhung des Ausdehnungskoeffizienten α im Vergleich zu bekannten Legierungen um etwa 5 % zu erreichen, wobei die für Thermometerflüssigkeiten hervorragenden Materialeigenschaften wie z. B. die hohe Oberflächenspannung, die niedrige Temperatur des Umschlags von der flüssigen in die feste Phase und die Linearität der Ausdehnung der flüssigen Metallegierung die der bisher bekannten Legierungen erreichen.
Für die Verwendung weiterer metallischer Galliumlegierungen als Thermometerflüssigkeit besitzen diese folgende Metallkomponentenanteile als Dreistofflegierung in Masse %

| | |
|---|---|
| Ga | 50,0-64,9 % |
| In | 10,0-24,9 % |
| Sn | 10,2-29,0 %. |

Innerhalb weiterer Metallkomponentenbereiche der Vierstofflegierung Ga, In, Sn und Zn nach Anspruch 4 und der Vierstofflegierung Ga, In, Sn und Pb nach Anspruch 5 wurden die nachfolgenden Legierungszusammensetzungen entwickelt.
Bei Verwendung von Zink ist wegen des relativ niedrigen Siedepunktes dieses Metalls der Einsatzbereich dieser Legierung gegenüber anderen Legierungsvarianten auf Temperaturen von -15°C bis +586°C begrenzt.
Eine solche Vier-Komponentenlegierung wurde in folgender Zusammensetzung für die Verwendung als Thermometerflüssigkeit gefunden :

| | |
|---|---|
| Ga | 64,0% |
| In | 20,0% |
| Sn | 10,5% |
| Zn | 5,5%. |

Eine weitere geeignete beispielhafte Vier-Komponentenlegierung wurde in folgender Zusammensetzung für die Verwendung als Thermometerflüssigkeit entwickelt:

| | |
|---|---|
| Ga | 64,9% |
| In | 21,3% |
| Sn | 12,4% |
| Pb | 1,4 %. |

Durch den Einsatz von Blei in geringer Menge wird eine Stabilisierung der β-Zinnkomponente erreicht , wobei diese die Stabilität der Legierungseigenschaften im Temperaturbereich von -21°C bis +1200°C sichert.

Die erfindungsgemäße Verwendung von Galliumlegierungen als Thermometerflüssigkeit wird als Ersatz für Quecksilber bis +600°C oder als Ersatz für reines Gallium im hohen Temperaturbereich für Quarzglasthermometer im Temperaturbereich bis +1200°C eingesetzt. Außerdem sind die Galliumlegierungen bei Maximathermometern, vorzugsweise Fieberthermometern, sowie technischen Thermometern mit Maximafunktion bei tiefen Temperaturen ebenfalls als Quecksilberersatz bis -21 °C anwendbar.

## Patentansprüche

1. Verwendung metallischer Galliumlegierungen als Thermometerflüssigkeit, bestehend als Mehrstoffsystem aus Gallium, Indium, Zinn, mit einem Anteil von Gallium unter 65 Masse %, **dadurch gekennzeichnet,**
- **dass** die Legierungen folgende Metallkomponenten mit Anteilen in Masse % enthalten:
| | |
|---|---|
| Ga | 50,0-64,9 % |
| In | 10,0-24,9 % |
| Sn | 10,0-29,0 % |
| Zn | 0-29,0 % |
| Pb | 0-10,0 % |
- **dass** sie frei von Gaseinschlüssen und anderen Metalloxiden sind,
- **dass** ihre Schmelztemperatur bei Normaldruck unter 0 °C und im Hochvakuum unter -19 °C liegt und
- **dass** ihr Temperaturmessbereich in Flüssigkeitsglasthermometern -15 °C bis +1200 °C umfasst.

2. Verwendung metallischer Galliumlegierungen als Thermometerflüssigkeit, bestehend als Mehrstoffsystem aus Gallium, Indium, Zinn, mit einem Anteil von Gallium unter 65 Masse %, **dadurch gekennzeichnet,**
- **dass** die Legierungen Metallkomponenten mit folgenden Anteilen in Masse % enthalten:
| | |
|---|---|
| Ga | 50,0-61 % |
| In | 10,0-24,9 % |
| Sn | 10,0-29,0 % |
| Zn | 0,5-29,0 % oder |
| Pb | 0,1-29,0 %. |
- **dass** sie frei von Gaseinschlüssen und anderen Metalloxiden sind,
- **dass** ihre Schmelztemperatur bei Normaldruck unter 0 °C und im Hochvakuum unter -19 °C liegt und
- **dass** ihr Temperaturmessbereich in Flüssigkeitsglasthermometern -15 °C bis +1200 °C umfasst.

3. Verwendung metallischer Galliumlegierungen als Thermometerflüssigkeit, bestehend als Mehrstoffsystem aus Gallium, Indium, Zinn, mit einem Anteil von Gallium unter 65 Masse %, **dadurch gekennzeichnet,**
- **dass** die Gelierungen Metallkomponenten mit folgenden Anteilen in Masse % enthalten:
| | |
|---|---|
| Ga | 50,0-64,9 % |
| In | 10,0-24,9 % |
| Sn | 10,2-29,0 %. |
- **dass** sie frei von Gaseinschlüssen und anderen Metalloxiden sind,
- **dass** ihre Schmelztemperatur bei Normaldruck unter 0 °C und im Hochvakuum unter -19 °C liegt und
- **dass** ihr Temperaturmessbereich in Flüssigkeitsglasthermometern -15 °C bis +1200 °C umfasst.

4. Verwendung metallischer Galliumlegierungen als Thermometerflüssigkeit, bestehend als Mehrstoffsystem aus Gallium, Indium, Zinn, mit einem Anteil von Gallium unter 65 Masse %, **dadurch gekennzeichnet,**
- **dass** die Legierungen Metallkomponenten mit folgenden Anteilen in Masse % enthalten:
| | |
|---|---|
| Ga | 50,0-64,9 % |
| In | 10,0-24,9 % |
| Sn | 10,0-29,9 % |
| Zn | 2,0-10,0 % und |
- **dass** sie frei von Gaseinschlüssen und anderen Metalloxiden sind,
- **dass** ihre Schmelztemperatur bei Normaldruck unter 0 °C und im Hochvakuum unter -19 °C liegt und
- **dass** ihr Temperaturmessbereich in Flüssigkeitsglasthermometern -15 °C bis +600 °C umfasst.

5. Verwendung metallischer Galliumlegierungen als Thermometerflüssigkeit, bestehend als Mehrstoffsystem aus Gallium, Indium, Zinn, mit einem Anteil von Gallium unter 65 Masse %, **dadurch gekennzeichnet,**
- **dass** die Legierungen Metallkomponenten mit folgenden Anteilen in Masse % enthalten:
| | |
|---|---|
| Ga | 50,0-64,9 % |
| In | 10,0-24,9 % |
| Sn | 10,0-29,0 % |
| Pb | 1,0-2,0 % und |
- **dass** sie frei von Gaseinschlüssen und anderen Metalloxiden sind,
- **dass** ihre Schmelztemperatur bei Normaldruck unter 0 °C und im Hochvakuum unter-19 °C liegt und
- **dass** sie für einen Temperaturbereich von -21 °C bis +1200 °C in Flüssigkeitsthermometern geeignet sind.

6. Verwendung metallischer Galliumlegierungen als Thermometerflüssigkeit, bestehend als Mehrstoffsystem aus Gallium, Indium, Zinn, mit einem Anteil von Gallium unter 65 Masse %, **dadurch gekennzeichnet,**
- **dass** sie als Vierkomponentenlegierung folgende Metallanteile in Masse % besitzt
| | |
|---|---|
| Ga | 64,0 % |
| In | 20,0 % |
| Sn | 10,5 % |
| Zn | 5,5 %. |
- **dass** sie frei von Gaseinschlüssen und anderen Metalloxiden sind,
- **dass** ihre Schmelztemperatur bei Normaldruck unter 0 °C und im Hochvakuum unter -19 °C liegt und
- **dass** ihr Temperaturmessbereich in Flüssigkeitsglasthermometern -15 °C bis +586 °C umfasst.

7. Verwendung metallischer Galliumlegierungen als Thermometerflüssigkeit, bestehend als Mehrstoffsystem aus Gallium, Indium, Zinn, mit einem Anteil von Gallium unter 65 Masse %, **dadurch gekennzeichnet,**
- **dass** sie als Vierkomponentenlegierung folgende Metallanteile in Masse % besitzt
| | |
|---|---|
| Ga | 64,9 % |
| In | 21,3 % |
| Sn | 12,4 % |
| Pb | 1,4 %. |
- **dass** sie frei von Gaseinschlüssen und anderen Metalloxiden sind,
- **dass** ihre Schmelztemperatur bei Normaldruck unter 0 °C und im Hochvakuum unter -19 °C liegt und
- **dass** ihr Temperaturmessbereich in Flüssigkeitsglasthermometern -15 °C bis +1200 °C umfasst.

8. Verwendung metallischer Galliumlegierungen nach einem der Ansprüche 1 bis 7 als Anzeigeflüssigkeit für Flüssigkeitsglasthermometer, vorzugsweise für Quarzglasthermometer und Maximalthermometer im Temperaturmessbereich von -21 °C bis +1200 °C.

## Claims

1. Use of metallic gallium alloys as thermometer liquid, consisting, as a multicomponent system, of gallium, indium, tin, with a gallium fraction of less than 65 weight percent,
**characterized in that**
- the alloys contain the following metal components with fractions in weight percent:
| | |
|---|---|
| Ga | 50.0-64.9 % |
| In | 10.0-24.9 % |
| Sn | 10.0-29.0% |
| Zn | 0-29.0 % |
| Pb | 0-10.0 % |
- they are free from gas occlusions and other metal oxides,
- their fusion temperature at normal pressure is less than 0 °C, and less than
- 19 °C in high vacuum, and **in that**
- their temperature measuring range in liquid-in-glass thermometers comprises -15 °C to +1200 °C.

2. Use of metallic gallium alloys as thermometer liquid, consisting, as a multicomponent system, of gallium, indium, tin, with a gallium fraction of less than 65 weight percent,
**characterized in that**
- the alloys contain metal components with the following fractions in weight percent:
| | |
|---|---|
| Ga | 50.0-61 % |
| In | 10.0-24.9 % |
| Sn | 10.0-29.0 % |
| Zn | 0.5-29.0 % or |
| Pb | 0.1-29.0 %. |
- they are free from gas occlusions and other metal oxides,
- their fusion temperature at normal pressure is less than 0 °C, and less than
- 19 °C in high vacuum, and **in that**
- their temperature measuring range in liquid-in-glass thermometers comprises -15°C to + 1200°C.

3. Use of metallic gallium alloys as thermometer liquid, consisting, as a multicomponent system, of gallium, indium, tin, with a gallium fraction of less than 65 weight percent,
**characterized in that**
- the alloys contain metal components with the following fractions in weight percent:
| | |
|---|---|
| Ga | 50.0-64.9 % |
| In | 10.0-24.9 % |
| Sn | 10.2-29.0 %. |
- they are free from gas occlusions and other metal oxides,
- their fusion temperature at normal pressure is less than 0 °C, and less than
- 19 °C in high vacuum, and **in that**
- their temperature measuring range in liquid-in-glass thermometers comprises -15 °C to +1200 °C.

4. Use of metallic gallium alloys as thermometer liquid, consisting, as a multicomponent system, of gallium, indium, tin, with a gallium fraction of less than 65 weight percent,
**characterized in that**
- the alloys contain metal components with the following fractions in weight percent:
| | |
|---|---|
| Ga | 50.0-64.9 % |
| In | 10.0-24.9 % |
| Sn | 10.0-29.9 % |
| Zn | 2.0-10.0 % and |
- they are free from gas occlusions and other metal oxides,
- their fusion temperature at normal pressure is less than 0 °C, and less than
- 19 °C in high vacuum, and **in that**
- their temperature measuring range in liquid-in-glass thermometers comprises -15 °C to +600 °C.

5. Use of metallic gallium alloys as thermometer liquid, consisting, as a multicomponent system, of gallium, indium, tin, with a gallium fraction of less than 65 weight percent,
**characterized in that**
- the alloys contain metal components with the following fractions in weight percent:
| | |
|---|---|
| Ga | 50.0-64.9 % |
| In | 10.0-24.9 % |
| Sn | 10.0-29.0 % |
| Pb | 1.0-2.0 % and |
- that they are free from gas occlusions and other metal oxides,
- that their fusion temperature at normal pressure is less than 0 °C, and less than
- 19 °C in high vacuum and that
- they are suitable for a range of temperatures from -21 °C to +1200 °C in liquid thermometers.

6. Use of metallic gallium alloys as thermometer liquid, consisting, as a multicomponent system, of gallium, indium, tin, with a gallium fraction of less than 65 weight percent,
**characterized in that**
- as a four-component alloy, it has the following metal fractions in weight percent:
| | |
|---|---|
| Ga | 64.0 % |
| In | 20.0 % |
| Sn | 10.5 % |
| Zn | 5.5 %. |
- they are free from gas occlusions and other metal oxides,
- their fusion temperature at normal pressure is less than 0 °C, and less than
- 19 °C in high vacuum, and **in that**
- their temperature measuring range in liquid-in-glass thermometers comprises -15 °C to +586 °C.

7. Use of metallic gallium alloys as thermometer liquid, consisting, as a multicomponent system, of gallium, indium, tin, with a gallium fraction of less than 65 weight percent,
**characterized in that**
- as a four-component alloy, it has the following metal fractions in weight percent:
| | |
|---|---|
| Ga | 64.9 % |
| In | 21.3 % |
| Sn | 12.4% |
| Pb | 1.4 %. |
- they are free from gas occlusions and other metal oxides,
- their fusion temperature at normal pressure is less than 0 °C, and less than
- 19 °C in high vacuum and **in that**
- their temperature measuring range in liquid-in-glass thermometers comprises -15 °C to +1200 °C.

8. Use of metallic gallium alloys as claimed in any claim 1 through 7 as indicator liquid for liquid-in-glass thermometers, preferably for quartz glass thermometers and maximum thermometers in the temperature measuring range from -21 °C to +1200 °C.

## Revendications

1. Utilisation d'alliages métalliques de gallium en tant que liquide pour thermomètres, se présentant comme un système à plusieurs substances avec du gallium, de l'indium, de l'étain, avec une part de gallium inférieure à 65 % de la masse, **caractérisée**
- **en ce que** les alliages contiennent les composants métalliques suivants pour des parts en pourcentage de la masse de :
| | |
|---|---|
| Ga | 50,0-64,9 % |
| In | 10,0-24,9 % |
| Sn | 10,0-29,0 % |
| Zn | 0-29,0 % |
| Pb | 0-10,0 %. |
- **en ce qu'**ils sont exempts d'inclusions de gaz et d'autres oxydes métalliques,
- **en ce que** leur température de fusion est inférieure à 0 °C sous pression atmosphérique et inférieure à -19 °C sous vide élevé,
- **en ce que** leur plage de mesure de température dans des thermomètres à liquide sous verre s'étend de-15 °C à +1200 °C.

2. Utilisation d'alliages métalliques de gallium en tant que liquide pour thermomètres, se présentant comme un système à plusieurs substances avec du gallium, de l'indium, de l'étain, avec une part de gallium inférieure à 65 % de la masse, **caractérisée**
- **en ce que** les alliages contiennent les composants métalliques suivants pour des parts en pourcentage de la masse de :
| | |
|---|---|
| Ga | 50,0-61 % |
| In | 10,0-24,9 % |
| Sn | 10,0-29,0 % |
| Zn | 0,5-29,0 % ou |
| Pb | 0,1-29,0 %. |
- **en ce qu'**ils sont exempts d'inclusions de gaz et d'autres oxydes métalliques,
- **en ce que** leur température de fusion est inférieure à 0 °C sous pression atmosphérique et inférieure à -19 °C sous vide élevé, et
- **en ce que** leur plage de mesure de température dans des thermomètres à liquide sous verre s'étend de -15 °C à +1200 °C.

3. Utilisation d'alliages métalliques de gallium en tant que liquide pour thermomètres, se présentant comme un système à plusieurs substances avec du gallium, de l'indium, de l'étain, avec une part de gallium inférieure à 65 % de la masse, **caractérisée**
- **en ce que** les alliages contiennent les composants métalliques suivants pour des parts en pourcentage de la masse de :
| | |
|---|---|
| Ga | 50,0-64,9 % |
| In | 10,0-24,9 % |
| Sn | 10,2-29,0 %. |
- **en ce qu'**ils sont exempts d'inclusions de gaz et d'autres oxydes métalliques,
- **en ce que** leur température de fusion est inférieure à 0 °C sous pression atmosphérique et inférieure à -19 °C sous vide élevé, et
- **en ce que** leur plage de mesure de température dans des thermomètres à liquide sous verre s'étend de -15 °C à +1200 °C.

4. Utilisation d'alliages métalliques de gallium en tant que liquide pour thermomètres, se présentant comme un système à plusieurs substances avec du gallium, de l'indium, de l'étain, avec une part de gallium inférieure à 65 % de la masse, **caractérisée**
- **en ce que** les alliages contiennent les composants métalliques suivants pour des parts en pourcentage de la masse de :
| | |
|---|---|
| Ga | 50,0-64,9 % |
| In | 10,0-24,9 % |
| Sn | 10,0-29,9 % |
| Zn | 2,0-10,0 % et |
- **en ce qu'**ils sont exempts d'inclusions de gaz et d'autres oxydes métalliques,
- **en ce que** leur température de fusion est inférieure à 0 °C sous pression atmosphérique et inférieure à -19 °C sous vide élevé, et
- **en ce que** leur plage de mesure de température dans des thermomètres à liquide sous verre s'étend de -15 °C à +600 °C.

5. Utilisation d'alliages métalliques de gallium en tant que liquide pour thermomètres, se présentant comme un système à plusieurs substances avec du gallium, de l'indium, de l'étain, avec une part de gallium inférieure à 65 % de la masse, **caractérisée**
- **en ce que** les alliages contiennent les composants métalliques suivants pour des parts en pourcentage de la masse de
| | |
|---|---|
| Ga | 50,0-64,9 % |
| In | 10,0-24,9% |
| Sn | 10,0-29,0 % |
| Pb | 1,0-2,0 % et |
- **en ce qu'**ils sont exempts d'inclusions de gaz et d'autres oxydes métalliques,
- **en ce que** leur température de fusion est inférieure à 0 °C sous pression atmosphérique et inférieure à -19 °C sous vide élevé, et
- **en ce qu'**ils sont indiqués pour une plage de températures entre -21 °C et+1200 °C dans des thermomètres à liquide.

6. Utilisation d'alliages métalliques de gallium en tant que liquide pour thermomètres, se présentant comme un système à plusieurs substances avec du gallium, de l'indium, de l'étain, avec une part de gallium inférieure à 65 % de la masse, **caractérisée**
- **en ce que**, comme alliage à quatre composants, celui-ci contient les parts métalliques suivantes en pourcentage de la masse :
| | |
|---|---|
| Ga | 64,0 % |
| In | 20,0 % |
| Sn | 10,5 % |
| Zn | 5,5 %. |
- **en ce qu'**ils sont exempts d'inclusions de gaz et d'autres oxydes métalliques,
- **en ce que** leur température de fusion est inférieure à 0 °C sous pression atmosphérique et inférieure à -19 °C sous vide élevé, et
- **en ce que** leur plage de mesure de température dans des thermomètres à liquide sous verre s'étend de -15 °C à +586 °C.

7. Utilisation d'alliages métalliques de gallium en tant que liquide pour thermomètres, se présentant comme un système à plusieurs substances avec du gallium, de l'indium, de l'étain, avec une part de gallium inférieure à 65 % de la masse, **caractérisée**
- **en ce que**, comme alliage à quatre composants, celui-ci contient les parts métalliques suivantes en pourcentage de la masse :
| | |
|---|---|
| Ga | 64,9 % |
| In | 21,3 % |
| Sn | 12,4% |
| Pb | 1,4 %. |
- **en ce qu'**ils sont exempts d'inclusions de gaz et d'autres oxydes métalliques,
- **en ce que** leur température de fusion est inférieure à 0 °C sous pression atmosphérique et inférieure à -19 °C sous vide élevé, et
- **en ce que** leur plage de mesure de température dans des thermomètres à liquide sous verre s'étend de -15 °C à +1200 °C.

8. Utilisation d'alliages métalliques de gallium selon l'une des revendications 1 à 7 en tant que liquide indicateur pour thermomètres à liquide sous verre, de préférence pour des thermomètres en verre de quartz et des thermomètres à maximum avec une plage de mesure de température entre -21 °C à +1200 °C.
